Europäisches Patentamt

European Patent Office

Office européen des brevets

(11) Veröffentlichungsnummer: **0 394 909 B1**

## (12) EUROPÄISCHE PATENTSCHRIFT

(45) Veröffentlichungstag der Patentschrift: **13.09.95**

(51) Int. Cl.6: **G01N 21/47**

(21) Anmeldenummer: **90107639.8**

(22) Anmeldetag: **23.04.90**

(54) **Verfahren zur diffusen Beleuchtung einer Messfläche in einem Testträgeranalysegerät.**

(30) Priorität: **28.04.89 DE 3914037**

(43) Veröffentlichungstag der Anmeldung:
**31.10.90 Patentblatt 90/44**

(45) Bekanntmachung des Hinweises auf die
Patenterteilung:
**13.09.95 Patentblatt 95/37**

(84) Benannte Vertragsstaaten:
**AT BE CH DE DK ES FR GB GR IT LI LU NL SE**

(56) Entgegenhaltungen:
EP-A- 0 075 766   EP-A- 0 165 535
DE-U- 8 816 390   US-A- 3 473 878
US-A- 3 910 701   US-A- 4 568 191

(73) Patentinhaber: **BOEHRINGER MANNHEIM GMBH**

**D-68298 Mannheim (DE)**

(72) Erfinder: **Schmidt, Elmar, Dr.**
**Neckarpromenade 14**
**D-6800 Mannheim 1 (DE)**
Erfinder: **Pauli, Manfred**
**Kastanienweg 8**
**D-6830 Schwetzingen (DE)**

(74) Vertreter: **Pfeifer, Hans-Peter**
**Patentanwälte**
**Dr. Moser und Dr. Pfeifer**
**Nowackanlage 15**
**D-76137 Karlsruhe (DE)**

EP 0 394 909 B1

**Beschreibung**

Die Erfindung betrifft ein Verfahren nach dem Oberbegriff des Anspruchs 1. Ein derartiges Verfahren zur diffusen Beleuchtung einer Meßfläche in einem Testträgeranalysegerät ist beispielsweise aus der EP-A-0 165 535 bekannt.

Analysen von Körperflüssigkeiten, insbesondere Blut und Urin, werden in jüngerer Zeit zunehmend mit Hilfe sogenannter trägergebundener Tests bestimmt. Bei diesen sind die Reagenzien in entsprechenden Schichten eines festen Testträgers eingebettet, auf den die Probe aufgebracht wird. Die Reaktion der Probe mit dem Reagenzsystem führt zu einem Farbumschlag auf dem Testträger. Überwiegend haben die Testträger die Form von Teststreifen, es werden jedoch auch andere Testträger, beispielsweise in Form quadratischer Plättchen, verwendet.

Zu den Testträgern werden vielfach Auswertegeräte angeboten, die dazu dienen, die Farbänderung apparativ auszuwerten und dadurch eine quantitative Analyse zu ermöglichen. Dies geschieht üblicherweise reflexionsphotometrisch, d.h. es wird die Reflektivität (diffuse Reflexion) der Meßfläche bei einer oder mehreren Wellenlängen gemessen. Aus dem Wert der Reflektivität oder auch aus deren zeitlicher Änderung läßt sich das gewünschte Analyseergebnis ableiten.

Dabei werden an die Genauigkeit der reflexionsphotometrischen Messung hohe Anforderungen gestellt. Die Anforderungen sind vor allem deshalb besonders hoch, weil die Änderung der Reflektivität im gesamten Meßbereich der Analyse im Regelfall sehr klein ist und deswegen schon kleine Fehler bei der Messung der Reflektivität sich sehr stark auf das Analyseergebnis auswirken. Trotz dieser hohen Genauigkeitsanforderungen sollen Testträgeranalysegeräte klein, handlich und kostengünstig herstellbar sein, zumal sie vielfach für die Selbstüberwachung des Patienten (insbesondere bei Diabetikern) oder für dezentrale Anwendungen in Arztpraxen, Rettungsfahrzeugen und dergleichen verwendet werden.

Die Genauigkeit der Reflektivitätsmessung ist wesentlich davon abhängig, daß die Meßfläche mit diffusem Licht beleuchtet wird. Hierzu eignet sich vor allem eine Ulbricht'sche Kugel, aus der Licht aus allen Raumrichtungen gleichmäßig auf die Meßfläche fällt. Stattdessen werden in Testträgeranalysegeräten aus Kostengründen und um eine kleine Bauweise zu ermöglichen, zunehmend mehrere Lichtsender eingesetzt, die die Meßfläche schräg von oben aus verschiedenen Raumrichtungen beleuchten. Als Lichtquellen verwendet man meist Leuchtdioden, die sich durch geringen Energieverbrauch, geringe Kosten und hohe Zuverlässigkeit auszeichnen. Solche Testträger-Auswertegeräte sind beispielsweise in der EP-A 165 535 und in der US-A 4 518 259 beschrieben. Die bekannten Geräte sind zwar kostengünstig und kompakt, jedoch wird die Genauigkeit nicht immer den gegebenen Anforderungen gerecht.

Der Erfindung liegt die Aufgabe zugrunde, ein Testträgeranalysegerät mit verbesserter Genauigkeit ohne zusätzlichen baulichen Aufwand zur Verfügung zu stellen.

Die Aufgabe wird durch ein Verfahren gemäß Anspruch 1 gelöst.

Die Einfallsebene ist die zur Meßfläche senkrecht verlaufende, die optische Achse des jeweiligen Lichtsenders einschließende Ebene. Die Lichtsender sind paarweise angeordnet, wobei zweckmäßigerweise die Lichtsender eines Paares gleich ausgebildet sind, insbesondere gleiche Wellenlängen haben. Die Lichtsender eines Paares beleuchten die Meßfläche aus gegenüberliegenden Raumrichtungen jeweils schräg von oben, wobei sie vorzugsweise den gleichen Einfallswinkel zur Meßfläche haben und im gleichen Abstand zu dieser angeordnet sind. Diese Bedingungen sind auch bei (beispielsweise aus den zitierten Publikationen) bekannten Geräten erfüllt. Dort sind die Lichtsender jedoch stets auf den gleichen Punkt, nämlich die Mitte der Meßfläche gerichtet.

Die optischen Achsen von zwei gegenüberliegenden Lichtsendern liegen in der gleichen Einfallsebene. Im Gegensatz dazu treffen sie bei der Erfindung nicht im gleichen Punkt auf die Meßfläche. Die Einfallsebenen sind gegeneinander versetzt, wobei sie näherungsweise parallel zueinander verlaufen. Diese asymmetrische Anordnung weicht von der üblichen Konstruktionsweise erheblich ab. Überraschenderweise führt die damit verbundene Verdrehung der Beleuchtungskonturen jedoch nicht zu Nachteilen. Es ergibt sich vielmehr eine qualitativ erheblich verbesserte gleichmäßige diffuse Beleuchtung und damit eine verbesserte Genauigkeit des Meßergebnisses.

Ein Testträger-Auswertegerät, bei dem die optischen Achsen der Lichtsender nicht auf den gleichen Punkt gerichtet sind, ist in der EP-A 99 024 (US-A-4 568 191) beschrieben. Dort wird jedoch nicht eine gleichmäßige Beleuchtung des Meßfeldes angestrebt. Vielmehr überlagern sich die Strahlenbündel der Sender so, daß sich eine gezielt ungleichmäßige Beleuchtung ergibt mit dem Ziel, in einem bestimmten Arbeitsbereich das Meßsignal unabhängig vom Abstand zwischen Meßempfänger und Meßfläche zu machen.

Die Erfindung wird im folgenden anhand eines in den Figuren schematisch dargestellten Ausführungsbeispiels näher erläutert; es zeigen:

| Fig. 1 | die Optikeinheit eines Testträgeranalysegerätes im Schnitt entlang der Linie I-I in Fig. 2 mit Anschlußschema der Elektronik; |
| Fig. 2 | eine Aufsicht auf eine Optikeinheit nach Fig. 1; |
| Fig. 3 | die Helligkeitskonturen in der Meßfläche bei einem Gerät nach dem Stand der Technik; |
| Fig. 4 und Fig. 5 | Helligkeitskonturen entsprechend Fig. 3 für zwei verschiedene Ausführungsformen der Erfindung. |

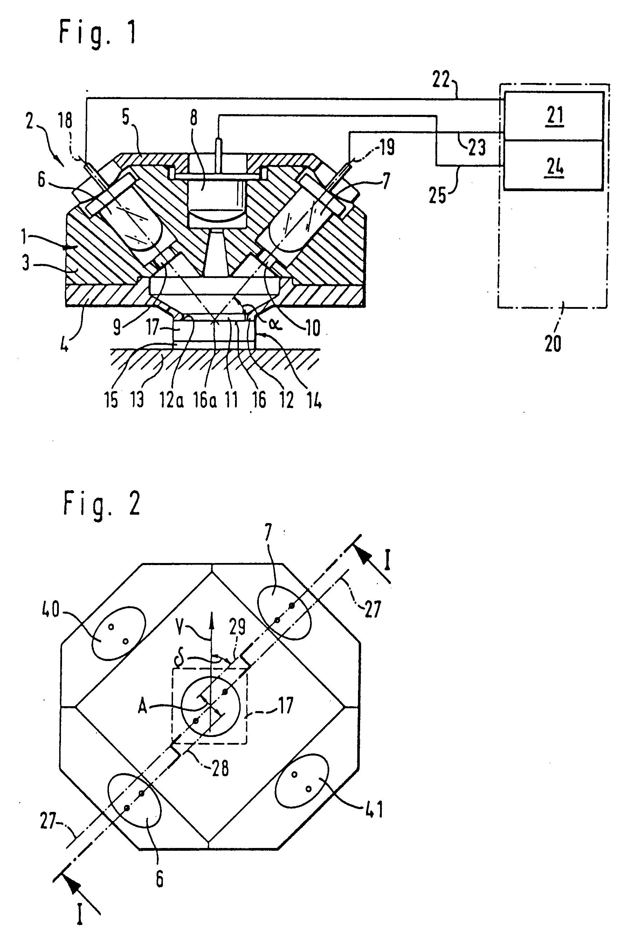

Das Gehäuse 1 der in Fig. 1 dargestellten Optikeinheit 2 besteht aus einem Mittelteil 3, einem Unterteil 4 und einem Oberteil 5, die zweckmäßigerweise aus Kunststoff hergestellt sind. Zwei Leuchtdioden 6,7 als Lichtsender und ein Phototransistor 8 als Meßempfänger sitzen in passenden Ausnehmungen des Gehäuses. Das Licht der Leuchtdioden 6,7 fällt durch Blendenöffnungen 9,10 auf das Meßfenster 11, welches von einer Blende 12 umrahmt wird. Die Blende 12 ist Bestandteil des Unterteils 4, welches zweckmäßigerweise in seiner Gesamtheit mattschwarz gefärbt ist.

Unter dem Fenster 11 liegt auf einer Testträgerhalterung 13 ein Testträger 14, wobei in der Querschnittsdarstellung von Fig. 1 eine Basisfolie 15 zu erkennen ist, auf der ein Testfeld 17 befestigt ist. Die von der Blende 12 umrahmte Oberfläche des Testfeldes 17 bildet die Meßfläche 16. Die optischen Achsen 18,19 der Lichtsender 6,7 treffen schräg, also unter einem Einfallswinkel von weniger als 90°, auf die Meßfläche 11.

Die Elektronikeinheit des Testträgeranalysegerätes ist insgesamt mit 20 bezeichnet. Sie enthält eine Steuereinheit 21, die über Leitungen 22,23 die Leuchtdioden 6,7 ansteuert. Eine ebenfalls in die Elektronikeinheit 20 integrierte Meß- und Auswerteschaltung 24 ist über eine Leitung 25 mit dem Meßempfänger 8 verbunden.

In Fig. 2 ist zu erkennen, daß die Lichtsender nicht wie üblich spiegelsymmetrisch angeordnet, sondern gegenüber der Mittelebene 27 versetzt sind. Mit 28 und 29 sind die Projektionen der optischen Achsen der Lichtsender auf die Meßflächenebene bzw. -anders ausgedrückt- die Schnittlinien der jeweiligen Einfallsebenen mit der Meßflächenebene bezeichnet. Sie sind um einen Abstand A gegeneinander versetzt.

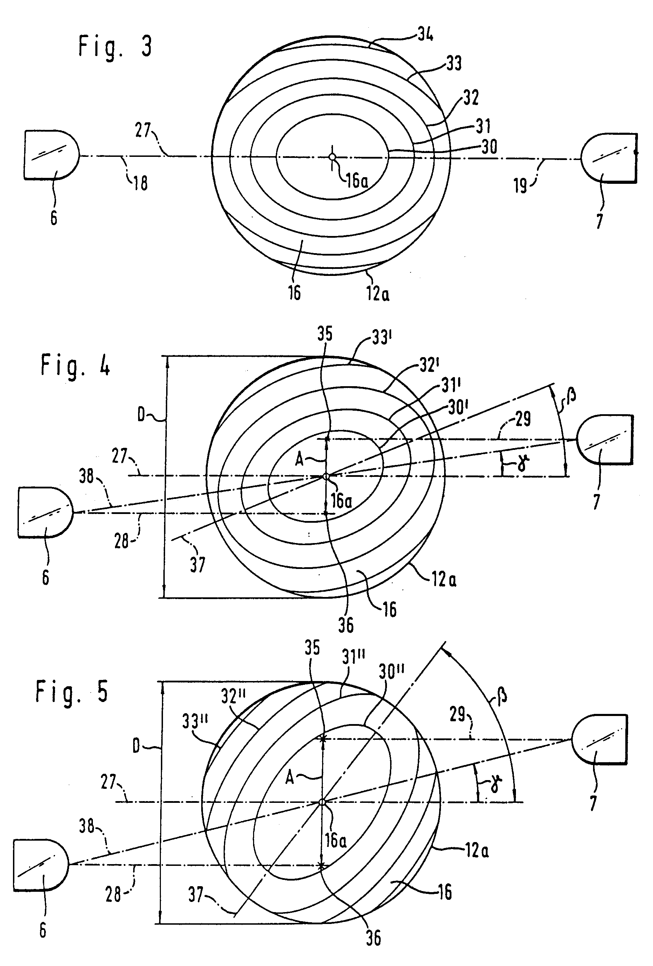

Die Wirkung dieser Maßnahme wird anhand der Figuren 3-5 näher erläutert.

Bei der Anordnung gemäß Fig. 3 fallen die optischen Achsen 18,19 der Lichtsender 6 und 7 mit der Mittelebene 27 überein, wie dies bisher allgemein üblich war. Die optischen Achsen beider Leuchtdioden treffen im Mittelpunkt 16a der Meßfläche 16 auf. Der von der Blende 12 gebildete Rand der Meßfläche 16 ist mit 12a bezeichnet.

Innerhalb der Meßfläche 16 sind Linien gleicher Beleuchtungsstärke 30,31,32,33,34 eingezeichnet, auf denen die Beleuchtungsintensität 90%, 80%, 70%, 60% und 50% der Intensität am Mittelpunkt 16a beträgt. Sie werden im folgenden als Helligkeitskonturen bezeichnet.

Figur 4 zeigt eine entsprechende Darstellung für den Fall, daß die Einfallsebenen 28,29 der Lichtsender 6,7 um einen Abstand A gegeneinander versetzt sind, der etwa 30% des Durchmessers der Meßfläche 16 entspricht. Entsprechend liegen die Auftreffpunkte 35,36 der optischen Achsen in einem Abstand von A/2 vom Mittelpunkt 16a.

Dadurch wird die Helligkeitsverteilung, die durch die Helligkeitskonturen 30′, 31′, 32′, 33′ dargestellt ist, verdreht. Der Winkel $\beta$ zwischen der Symmetrieachse 37 der Helligkeitsverteilung und der Mittelebene 27 ist mehr als doppelt so groß wie der Winkel $\gamma$ zwischen der Verbindungslinie 38 der Lichtsender und der Mittelebene 27. Trotz dieser starken Verdrehung ergibt sich eine gleichmäßigere Beleuchtung.

Dieser Effekt wird noch verstärkt, wenn der Abstand A weiter vergrößert wird. Fig. 5 zeigt die Helligkeitsverteilung für den Fall, daß A etwa 55 % des Durchmessers D beträgt. Für den Fall, daß die Meßfläche nicht rund ist, sollte A auf die größte Dimension der Meßfläche (bei quadratischer Meßfläche beispielsweise also die Diagonale) bezogen werden.

Bevorzugt sollte der Abstand, um den die Einfallsebenen zueinander versetzt sind mindestens 20 %, besonders bevorzugt 30 % und optimal mindestens 40 % der größten Dimension der Meßfläche betragen.

In Figur 5 ist die Verdrehung der Symmetrieachse 37, charakterisiert durch den Winkel $\beta$, noch stärker als bei Fig. 4. Die Beleuchtung ist aber außerordentlich gleichmäßig. Dies ist daran zu erkennen, daß die Helligkeitskonturen 30″, 31″, 32″, 33″ eine gedrungenere, mehr dem Kreis angenäherte Form haben.

Quantitativ läßt sich die Verbesserung als Prozentsatz derjenigen Fläche ausdrücken, auf der die Intensität mindestens 80 % der Intensität im Mittelpunkt 16 a beträgt. Dieser Prozentsatz ist bei Fig. 3 ca. 39 %, bei Fig. 4 ca. 46 % und bei Fig. 5 ca. 63 %. Diese gleichmäßigere Beleuchtung führt zu einer verbesserten Meßgenauigkeit, insbesondere in den in der Praxis häufigen Fällen, bei denen die Meßfläche 16 eine Inhomogenität im Sinne einer Mitte-Rand-Variation aufweist.

Hierbei ist zu berücksichtigen, daß die notwendige Ausblendung der von dem Meßempfänger erfaßten Meßfläche ohnehin zu einer Unterbewertung der Randbereiche führt, was bei der Beleuchtung nach dem Stand der Technik noch verstärkt wird.

Wenn die Struktur des Testfeldes eine Vorzugsrichtung (V in Fig. 2) hat, was durch die kontinuierliche bahnenweise Produktion der üblichen Testfeldmaterialien vielfach der Fall ist, sind die Einfallsebenen vorzugsweise um einen Winkel, der den Winkel $\beta$ näherungsweise kompensiert, gegenüber der Vorzugsrichtung V gedreht.

In den Figuren sind idealisierte Verhältnisse dargestellt, bei denen die Einfallsebenen exakt parallel zueinander verlaufen. Dies ist im allgemeinen zweckmäßig, jedoch sind gewisse Abweichungen von diesem parallelen Verlauf zulässig, ohne daß die Vorteile der Erfindung verlorengehen. Bei nichtparallelen Einfallsebenen bezieht sich der Abstand A, um den diese gegeneinander versetzt sind, auf die Auftreffpunkte 35,36.

Bei der Verwendung von Leuchtdioden ergeben sich gewisse Abweichungen von der in den Figuren dargestellten strengen Geometrie ohnehin dadurch, daß bei diesen Lichtquellen der Zentralstrahl des Lichtbündels im allgemeinen nicht exakt mit der optischen Achse der Anordnung (welche durch die Gehäuseachse der Leuchtdiode und die Blenden 9, 10 bestimmt wird) übereinstimmt. Leuchtdioden "schielen" in einem gewissen Umfang. Dies führt zu einer Helligkeitsverteilung, die gegenüber der Darstellung in den Figuren 4 und 5 weniger symmetrisch ist. Experimente zeigen jedoch, daß auch bei den durch die Unvollkommenheiten der Leuchtdioden gegebenen realen Bedingungen auf Basis der Erfindung eine erheblich gleichmäßigere Beleuchtung erreicht wird.

Die Erfindung ist nicht auf die Verwendung von lediglich zwei Leuchtdioden beschränkt. Insbesondere kann es zweckmäßig sein, in einer Optikeinheit mehrere Paare von jeweils einander gegenüber mit versetzten Einfallsebenen angeordneten Lichtquellen vorzusehen. In Fig. 2 ist ein zweites Leuchtdiodenpaar 40,41 dargestellt. Zweckmäßigerweise haben die Leuchtdioden der verschiedenen Paare verschiedene Wellenlängen, um eine Mehrwellenlängen-Messung der Reflektivität zu ermöglichen.

Die Reflektivität einer Meßfläche wird stets durch Vergleich mit einer Referenzfläche bestimmt. Bei der Anordnung gemäß Figur 1 kann dies beispielsweise dadurch geschehen, daß ein Referenzfeld mit einer definierten Reflektivität statt des Meßfeldes 15 unter dem Meßfenster 11 angeordnet wird. Soweit mehrere Lichtsender zur Beleuchtung der gleichen Meßfläche verwendet werden, wird üblicherweise zunächst die Meßfläche und dann die Referenzfläche mit sämtlichen Lichtsendern beleuchtet und die dabei gewonnenen Meßergebnisse werden ins Verhältnis zueinander gesetzt.

Bei der vorliegenden Erfindung wird gemäß einer bevorzugten Ausführungsform dagegen vorgeschlagen, daß die bei der Beleuchtung der Meßfläche und der Referenzfläche mit den Lichtsendern eines Paares gleicher Wellenlänge (z.B. 6,7) am Meßempfänger anstehenden Meßsignale und Referenzsignale getrennt voneinander in Beziehung gesetzt werden, um lichtsenderspezifische Zwischenergebnisse zu gewinnen, aus denen die Reflektivität berechnet wird.

Bezeichnet man das üblicherweise bezüglich Fremdlicht und Verstärkerdrift korrigierte (vgl. z.B. EP-A-00 75 767) Intensitätssignal des Meßempfängers 8 bei Beleuchtung mit der Leuchtdiode 6 mit IP1 für die Probenmessung und IR1 für die Referenzmessung und die entsprechenden Signale für die Leuchtdiode 7 mit IP2 und IR2, so ergeben sich lichtsenderspezifische Zwischenergebnisse R1, R2 beispielsweise durch Quotientenbildung:

$$R_1 = \frac{I_{P1}}{I_{R1}} \qquad\qquad R_2 = \frac{I_{P2}}{I_{R2}}$$

Der gültige Remissionswert läßt sich dann algebraisch ermitteln, beispielsweise durch einfache ungewichtete Mittelwertbildung:

$$R = \frac{R_1 + R_2}{2}$$

Um ein mehrfaches Auswechseln des eigentlichen Testträgers mit der Meßfläche (Probenmessung) gegen die Referenzfläche (Referenzmessung) zu vermeiden, werden die Werte $I_{P1}$ und $I_{P2}$ bzw. $I_{R1}$ und $I_{R2}$ jeweils nacheinander bestimmt und abgespeichert. Erst nach Messung aller vier Werte erfolgt die Verarbeitung in der zuvor angegebenen Weise.

Durch diese bevorzugten Maßnahmen wird erreicht, daß die Meßergebnisse der einzelnen Leuchtdioden unabhängig von deren individuellen Eigenschaften gleichmäßig gewichtet werden, während bei gleichzeitiger Beleuchtung der Meß- bzw. Referenzfläche mit mehreren Lichtsendern erhebliche Meßfehler dadurch verursacht werden, daß die üblichen Leuchtdioden, auch wenn sie vollständig typgleich sind, erheblich verschiedene Eigenschaften, insbesondere bezüglich ihrer Intensität, ihrer Wellenlänge und der Vorzugsstrahlrichtung des Lichtstrahls in Relation zur Gehäuseachse haben können. Diese Einflüsse können sich so summieren, daß die an dem Empfänger entstehende Signalintensität sich für eine LED um einen Faktor 5 oder mehr von einer anderen LED unterscheidet. Daraus resultiert eine völlig ungleichförmige Gewichtung der mit den beiden Leuchtdioden gewonnenen Signale, was bei der vorliegenden Erfindung besonders nachteilig ist, weil die Leuchtdioden auf unterschiedliche Bereiche der Meßfläche 16 gerichtet sind.

## Patentansprüche

1. Verfahren zur diffusen Beleuchtung einer Meßfläche (16) in einem Testträgeranalysegerät, welches eine Optikeinheit (2) mit mehreren Lichtsendern (6,7), deren optische Achsen (18,19) jeweils in einer zu der Meßfläche senkrechten Einfallsebene schräg zur Meßfläche verlaufen, und einen den mehreren Lichtsendern zugeordneten, über der Meßfläche angeordneten Meßempfänger (8) sowie eine Meß- und Auswerteschaltung (20) zur Messung des Ausgangssignals des Meßempfängers (8) und zur Bestimmung der Reflektivität der Meßfläche aus dem Intensitätssignal des Meßempfängers (8) bei Beleuchtung mit den zugeordneten Lichtsendern (6,7) enthält, dadurch gekennzeichnet, daß zur Erzielung einer möglichst gleichmäßigen Beleuchtung der Meßfläche (16) die Lichtsender in der Optikeinheit in Bezug auf den Meßempfänger derart einander mit versetzten Einfallsebenen gegenüberliegend angeordnet werden, daß die Auftreffpunkte (35,36) der optischen Achsen (18,19) der Lichtsender (6,7) auf der Meßfläche (16) einen Abstand (A), der mindestens 20% der größten Dimension der Meßfläche beträgt, voneinander aufweisen.

2. Verfahren nach Anspruch 1, **dadurch gekennzeichnet**, daß die Lichtsender (6,7) Leuchtdioden sind.

3. Verfahren nach Anspruch 1, **dadurch gekennzeichnet**, daß die Einfallswinkel $\alpha$ zwischen den optischen Achsen (18,19) der Lichtsender (6,7) und der Meßfläche (16) zwischen 30° und 60° liegen.

4. Verfahren nach Anspruch 1, **dadurch gekennzeichnet**, daß der Abstand, um den die Einfallsebenen (28,29) gegeneinander versetzt sind (A) mindestens 30 %, bevorzugt mindestens 40 % der größten Dimension der Meßfläche beträgt.

5. Verfahren nach Anspruch 1, **dadurch gekennzeichnet**, daß die Optikeinheit mehrere Paare von jeweils einander gegenüber mit versetzten Einfallsebenen angeordneten Lichtsendern (6,7,40,41) aufweist, die sich bezüglich der emittierten Wellenlänge unterscheiden.

6. Verfahren nach Anspruch 1, **dadurch gekennzeichnet**, daß die Lichtsender (6,7) sowohl getrennt voneinander die Meßfläche (16) als auch getrennt voneinander eine Referenzfläche beleuchten und die dabei jeweils am Meßempfänger (8) anstehenden Meßsignale bzw. Referenzsignale getrennt voneinander in Beziehung zueinander gesetzt werden, um lichtsenderspezifische Zwischenergebnisse zu gewinnen, aus denen die Reflektivität der Meßfläche (16) berechnet wird.

7. Verfahren nach Anspruch 1, **dadurch gekennzeichnet**, daß die Struktur der Meßfläche eine Vorzugsrichtung (V) hat und die Einfallsebenen (28,29) um einen Azimutwinkel $\delta$ zwischen 30° und 60° gegenüber der Vorzugsrichtung verdreht sind.

## Claims

1. Method for the diffuse illumination of a measurement surface (16) in a test carrier analysis device which contains an optical unit (2) comprising several light transmitters (6,7) whose optical axes (18,19) run obliquely to the measurement surface within a plane of incidence extending at right angles to the measurement surface, and further comprising a measurement receiver (8) corresponding to the light transmitters and arranged above the measurement receiver (8) and a measurement and evaluation circuit (20) for measuring the output signal of the measurement receiver (8) and for determining the reflectivity of the measurement surface from the intensity signal of the measurement receiver (8) upon illumination with the corresponding light transmitters (6,7,),
**characterized in that**,

in order to achieve as uniform as possible an illumination of the measurement surface (16), the light transmitters in the optical unit are arranged opposite one another relative to the measurement receiver and with off-set planes of incidence, in a manner such that the points of impact (35,36) of the optical axes (18, 19) of the light transmitters (6,7) upon the measurement surface (16) have a distance (A) from another which amounts to at least 20% of the greatest dimension of the measurement surface.

2. Method according to claim 1, **characterized in that** the light transmitters (6,7) are light-emitting diodes.

3. Method according to claim 1, **characterized in that** the angles of incidence $\alpha$ between the optical axes (18,19) of the light transmitters (6,7) and the measurement surface (16) lie between 30° and 60°.

4. Method according to claim 1, **characterized in that** the distance (A) by which the planes of incidence (28,29) are off-set from one another is at least 30%, preferably at least 40% of the greatest dimension of the measurement surface.

5. Method according to claim 1, **characterized in that** the optical unit comprises several pairs of light transmitters (6,7,40,41) arranged opposite one another with off-set planes of incidence, said light transmitters differing as regards the emitted wave lengths.

6. Method according to claim 1, **characterized in that** the light transmitters (6,7) separately illuminate not only the measurement surface (16) but also a reference surface and that the respective measurement signals and reference signals obtained on the measurement receiver (8) are compared separately for each light transmitter in order to obtain light-transmitter-specific interim results from which the reflectivity of the measurement surface (16) is calculated.

7. Method according to claim 1, **characterized in that** the structure of the measurement surface has a preferred direction (V) and that the planes of incidence (28,29) are rotated by an azimuth angle $\delta$ between 30° and 60° with respect to the preferred direction.

**Revendications**

1. Procédé pour l'éclairage diffus d'une surface de mesure (16) dans un appareil d'analyse de supports de test,
lequel comporte une unité optique (2) avec plusieurs émetteurs de lumière (6, 7) dont l' axe optique (18, 19) s'étend obliquement par rapport à la surface de mesure sur un plan d'incidence perpendiculaire à la surface de mesure, un récepteur de mesure (8) disposé au-dessus de la surface de mesure et affecté auxdits émetteurs de lumière, ainsi qu'un circuit de mesure et d'analyse (20) pour la mesure du signal de sortie du récepteur de mesure (8) et pour la détermination de la réflectivité de la surface de mesure à partir du signal d'intensité du récepteur de mesure (8) lors de l'éclairage à l'aide des émetteurs de lumière assortis,
**caractérisé en ce que**,
pour assurer l'éclairage aussi uniforme que peut se faire de la surface de mesure (16), les émetteurs de lumière dans l'unité optique sont opposés les uns aux autres par rapport au récepteur de mesure et avec des plans d'incidence décalés, de sorte que les points d'incidence (35, 36) des axes optiques (18,19) des émetteurs de lumière (6,7) sur la surface de mesure (16) présentent un écart (A) qui correspond à au moins 20% de la dimension la plus grande de la surface de mesure.

2. Procédé suivant la revendication 1, **caractérisé en ce que** les émetteurs de lumière (6, 7) sont des diodes lumineuses.

3. Procédé suivant la revendication 1**, caractérisé en ce que** les angles d'incidence $\alpha$ entre les axes optiques (18,19) des émetteurs de lumière (6,7) et la surface de mesure (16) sont compris entre 30° et 60°.

6

4. Procédé suivant la revendication 1, **caractérisé en ce que** l'écart, dont sont décalés les plans d'incidence (28,29) l'un par rapport à l'autre (A) est d'au moins 30%, de préférence d'au moins 40% de la dimension la plus grande de la surface de mesure.

5. Procédé suivant la revendication 1, **caractérisé en ce que** l'unité optique présente plusieurs paires d'émetteurs de lumière (6,7,40,41) opposés les uns aux autres avec des plans d'incidence décalés et qui se distinguent quant à la longueur d'onde émise.

6. Procédé suivant la revendication 1, **caractérisé en ce que** les émetteurs de lumière (6,7) éclairent, chacun de façon séparée, non seulement la surface de mesure (16), mais encore une surface de référence et que les signaux de mesure et les signaux de référence transmis au récepteur de mesure (8) sont mis en relation séparément les uns des autres, afin d'obtenir des résultats intermédiaires spécifiques aux émetteurs de lumière à partir desquels est calculée la réflectivité de la surface de mesure (16).

7. Procédé suivant la revendication 1, **caractérisé en ce que** la structure de la surface de mesure présente un sens préférentiel (V) et que les plans d'incidence (28,29) sont orientés par rapport au sens préférentiel à un angle azimut $\delta$ compris entre 30° et 60°.

Fig. 1

Fig. 2

EP 0 394 909 B1

Fig. 3

Fig. 4

Fig. 5

9